# EUROPÄISCHE PATENTSCHRIFT

(11) **EP 1 089 070 B1**
(45) Veröffentlichungstag und Bekanntmachung des Hinweises auf die Patenterteilung: **15.12.2004**
(21) Anmeldenummer: 00116624.8
(22) Anmeldetag: 01.08.2000
(51) Int. Cl.: G01N 21/952, G01B 11/04, B60M 1/28

(54) **Bildaufnahme- und Auswertesystem**
Image recording and evaluation system
Appareil d'enregistrement et d'évaluation d'images

(30) Priorität: 03.08.1999 DE 19936448
(43) Veröffentlichungstag der Anmeldung: 04.04.2001
(73) Patentinhaber: SIEMENS AKTIENGESELLSCHAFT, 80333 München (DE)
(72) Erfinder: Schneider, Richard Dr., 82024 Taufkirchen (DE); Hoffmann, Christian Dr., 81545 München (DE); Böttger, Christian Dr., 10245 Berlin (DE); Puschmann, Werner, 91338 Igensdorf (DE)

(56) Entgegenhaltungen:
- DE-C- 19 634 060
- GIGCH VAN J M ET AL: "THE CONTACT WIRE THICKNESS-MEASURING SYSTEM (ATON) OF THE NETHERLANDS RAILWAYS" RAIL INTERNATIONAL, INTERNATIONAL RAILWAY CONGRESS ASSOCIATION. BRUXELLES, BE, April 1991 (1991-04), Seiten 20-31, XP000892526 ISSN: 0020-8442

## Beschreibung

Die Erfindung betrifft ein Bildaufnahme- und Auswertesystem zur Inspektion von Einrichtungen elektrischer Bahnen wie Fahrleitungen die von Quertrageinrichtungen gehalten werden. Dabei werden im wesentlichen die als Fahrleitungen bezeichneten Längskettenwerke, die den Fahrdraht beinhalten, behandelt, sowie die das Längskettenwerk tragenden Quertrageinrichtungen, die jeweils entsprechend ihrer Bezeichnung in Fahrtrichtung der elektrischen Bahnen bzw. quer dazu orientiert sind.

Die Fahrleitungen elektrischer Bahnen unterliegen Witterungseinflüssen und dem Verschleiß im täglichen Betrieb. So verursacht der Schleifer des Stromabnehmers einen Abrieb am stromführenden Fahrleitungsdraht. Schwingungen des Fahrdrahtes können unter Umständen Schraubverbindungen lockern. Ferner können zum Beispiel nicht festgezurrte Abdeckplanen von Güterzügen vom Fahrtwind hochgehoben und gegen Fahrleitungen oder Quertrageinrichtungen schlagen, was zu erheblichen mechanischen Schäden führt. Um die Verfügbarkeit zu gewährleisten und Betriebsstörungen zu vermeiden, müssen die Strecken in regelmäßigen Zeitabständen inspiziert werden, um gegebenenfalls rechtzeitig Reparaturen durchzuführen. Diese Inspektionen sind derzeit so personalaufwendig, daß sie nicht im erforderlichen Umfang durchgeführt werden können.

Während für die Inspektion des Oberbaues, insbesondere der Gleisanlagen, bereits Diagnosefahrzeuge mit ausgereiften automatischen Meßsystemen eingesetzt werden, sind Inspektionsverfahren für die Fahrleitungen und Quertrageinrichtungen fast nicht automatisiert. Es haben sich bisher im Betrieb optische Verfahren zur Lageerkennung des Fahrdrahtes bewährt; siehe Literaturstelle /1/. Zur Bestimmung der Resthöhe des Fahrdrahtprofiles können die Literaturstellen /2/ und /3/ angeführt werden. Die Bestimmung der Resthöhe durch Sensoren an einem speziellen Stromabnehmer erfolgt im Stand der Technik nicht berührungslos, das heißt, der Fahrdraht wird angehoben, was eine gleichzeitige genaue Lagemessung stört. Zur fortwährenden Korrektur der Wegstreckenzähler der Diagnosefahrzeuge werden die Anwesenheit und Lage von Quertrageinrichtungen auch bei sehr hohen Fahrzeuggeschwindigkeiten mit Hilfe eines Laserradars automatisch erkannt; Literaturstelle /1/. Übliche Videokameras und Recorder werden eingesetzt, um im Fahrtrichtung Bilder mit relativer geringer Auflösung aufzunehmen. Ein Erkennen von Defekten mit der Größe von Schrauben ist auf den mit diesen Geräten aufgenommenen Bildern nicht möglich. Zur Inspektion der Quertrageinrichtungen und des Längskettenwerkes werden im allgemeinen Personen eingesetzt, die zu Fuß die Strecke ablaufen. Diese Tätigkeit ist nicht nur zeitaufwendig und anstrengend, sondern auch nicht ungefährlich, falls sie während der normalen Betriebszeit stattfindet.

Die Aufgabe der Erfindung liegt in der Bereitstellung eines Bildaufnahmesystems zur Inspektion von Fahrleitungen mit entsprechenden Quertrageinrichtungen von elektrischen Bahnen, wobei die Bilddaten einem Auswertesystem zur Ermittlung von Fehlern zugeführt werden. Die Behandlung der Bilddaten von der Bildaufnahme bis zu deren Zuführung zum Bildauswertesystem soll eine hohe Ortsauflösung kombinieren mit einer relativ hohen Geschwindigkeit des Inspektionsfahrzeuges.

Die Lösung dieser Aufgabe geschieht durch die Merkmalskombination des Anspruches 1 oder 2.

Der Erfindung liegt die Erkenntnis zugrunde, daß eine optimale Kombination von Beleuchtungseinheit, Kamera, Hard- und Software ein Gesamtsystem ergibt, welches den derzeitigen Aufwand wesentlich reduziert. Dabei inspiziert das Bildaufnahme- und Auswertesystem das zu inspizierende Objekt, das heißt Quertrageinrichtungen und Längskettenwerke, die die stromführenden Fahrdrähte beinhalten. Die Bilddaten werden erfaßt und gespeichert und für eine anschließende automatische Bildauswertesoftware zur Verfügung gestellt. Der wesentliche Vorteil gegenüber konventionellen Videokameras mit angeschlossenem Recorder (Aufzeichnungseinheit) liegt in der hohen Ortsauflösung von etwa 1 mm bei einem mehrere Meter großen Gesichtsfeld. Zusätzlich können kurze Belichtungszeiten von weniger als 100 µs realisiert werden, was trotz der hohen Auflösung Geschwindigkeiten von 80 km/h des Inspektionfahrzeuges erlaubt. Die Beleuchtung ist derart ausgelegt, daß nicht nur bei Nacht, sondern auch bei bedeckten Himmel für eine automatische Bildauswertung ausreichend konstante Kontrastverhältnisse erreicht werden. In Verbindung mit einer Bildauswertung zur automatischen Defekterkennung kann das bisherige personelle Verfahren rationalisiert werden, was die Verfügbarkeit und Betriebssicherheit der elektrifizierten Bahnstrecken erhöht. Zudem wird mit den Bildern eine zum Beispiel für Gewährleistungsansprüche geeignete Dokumentation geschaffen.

Vorteilhafte Ausgestaltungen können den Unteransprüchen entnommen werden.

Das Ziel der Erfindung, nämlich eine höhere Geschwindigkeit eines Inspektionsfahrzeuges bei gleichbleibender Prüfqualität zu ermöglichen, wird dadurch erreicht, daß die enorme Menge von anfallenden Daten derart reduziert und komprimiert, daß sich eine mit derzeitigen Mitteln vernünftig bearbeitbare Datenmenge ergibt, so daß eine längere Wegstrecke an einem Stück inspizierbar ist.

Die Beleuchtung mit Hilfe einer Laserdiode hat konventionellen Scheinwerfern gegenüber den Vorteil, daß der Platzbedarf auf dem Dach des Diagnosefahrzeuges vergleichsweise gering ist. Somit wird der Luftwiderstand eines Fahrzeuges bei hohen Geschwindigkeiten in tragbaren Grenzen gehalten. Ferner ist es möglich, das Laserband so zu fokussieren, daß über den Schärfentiefebereich von einigen Metern, beispielsweise 2 m, die Dicke des Lichtbandes einige Millimeter, beispielsweise 4 mm, beträgt und somit nur der zu detektierende Bereich beleuchtet wird.

Die Platzvorteile beim Einsatz einer Laserdiode werden mit Nachteilen hinsichtlich der Detektionsgenauigkeit erkauft, da der Einsatz von Scheinwerfern nicht das Problem der Granulation bzw. des Speckle-Rauschens mit sich bringt.

Der Einsatz einer Rasterlinse ist wesentlich hinsichtlich der Laserschutzbestimmungen. Somit kann die Leistung einer Laserdiode erhöht werden, ohne gegen Laserschutzbestimmungen zu verstoßen, da der Laserstrahl in mehrere beispielsweise mindestens drei Laserstrahlen aufgeteilt wird. Die Darstellung einer ausgedehnten Lichtquelle kann beispielsweise in Form einer Lichtleiste ausgebildet sein.

Da Längskettenwerk und Quertrageinrichtungen größer als ein Meter sind, müssen an die Auflösung der Kameras besondere Anforderungen gestellt werden. Bei einer Diodenzeilenkamera sind vorteilhafterweise mindestens 2000 Pixel notwendig. Bei einer Flächenkamera sind dies je nach Anzahl der Kameras 1000 x 1000 Pixel. Es ist weiterhin vorteilhaft, eine Diodenzeilenkamera mit 4000 Pixeln einzusetzen und Flächenkameras mit 4000 x 4000 Pixeln. Beim Einsatz von Scheinwerfern in Verbindung mit Flächenkameras kann die Bildaufnahme im Objektraum bezogen auf die Quertrageinrichtungen mit einer oder mehreren Kameras geschehen. Im weiteren Verlauf wird ein Ausführungsbeispiel mit dem Einsatz von 9 Kameras beschrieben.

Das Bildaufnahmesystem ist bevorzugt dafür ausgelegt, Fahrleitungen oder Quertrageinrichtungen von zwei gegenüberliegenden Seiten zu beleuchten und aufzunehmen.

Die Datenreduktion ist für das Bildaufnahme- und Auswertesystem obligatorisch. Da die Größe der verwendeten Speichermedien schnell an eine obere Grenze stößt und unhandlich wird, ist vorteilhafterweise vorgesehen die nach der Datenreduktion vorhandenen Datenmenge zu komprimieren. Die vorliegenden komprimierten Daten können somit vorteilhafterweise auf einem einzigen Datenspeichermedium gespeichert werden, wobei die Dekomprimierung sich direkt anschließt oder zeitverzögert durchgeführt wird. Die dekomprimierten Daten können der Auswerteeinheit zugeführt werden. Die Datenreduktion beinhaltet im Gegensatz zur Komprimierung die Eliminierung von Datenmengen, die im relativ großzügig ausgelegten Objektraum angefallen sind, aber nicht das Längskettenwerk und die Quertrageinrichtungen betreffen.

Der Einsatz von Infrarotbeleuchtung schließt vorteilhafterweise die Blendwirkung der Beleuchtung aus. Eine Wellenlänge von etwa 800 nm ist zweckmäßig.

Die Auflösung der eingesetzten Kameras wird vorteilhafterweise derart ausgelegt, daß ein Pixel in einer Kamera von den lateralen Abmessungen hat am Objekt eine Größe oder Ausdehnung von 2 mm aufweist.

Mit einer Belichtungsdauer von 90 µs kann bei einer wie oben vorgegebenen Auslösung eine entsprechende Fahrzeuggeschwindigkeit des Inspektionsfahrzeuges berechnet werden.

Der Einsatz von Laserlicht hat wesentliche Auswirkungen auf die Leistung der Beleuchtungseinheit. Mit Lasern läßt sich die Beleuchtung mit einem Zehntel der Leistung von Scheinwerfern durchführen. In einer bevorzugten Ausführungsform weist eine Laserdiode weniger als 100 Watt elektrische Eingangsleistung bei einem Wirkungsgrad von ca. 0.3 auf. Ein Metalldampfscheinwerfer weist bevorzugt mindestens 1kW elektrische Eingangsleistung auf. Die Vorteile von Scheinwerfern liegen im optischen Bereich.

In vorteilhafter Weise wird parallel zur erfindungsgemäßen Datenaufnahme eine Videokamera normaler Bauart, das heißt mit einer Auflösung von mehr als 2 mm parallel bzw. synchron eingesetzt. Da bei dieser Videokamera keinerlei Speicherprobleme bestehen, ist deren Einsatz unkritisch. Die damit parallel aufgenommenen Fahrleitungseinrichtungen können bei der Bildauswertung herangezogen werden, um die jeweilige Auswertung der Bilder mit hoher Auflösung zu unterstützen.

Der Einsatz eines Wegstreckenzählers ist ebenso vorteilhaft, da auch hiermit die Bildauswertung unterstützt werden kann.

Im folgenden werden anhand von schematischen Figuren examplarische Ausführungsbeispiele beschrieben:
- Figur 1: zeigt die Bildaufnahme bezüglich eines Längskettenwerkes mit Tragseil und Fahrdraht mit Zeilenkameras von zwei Seiten,
- Figur 2: zeigt die Aufsicht auf ein Meßfahrzeug mit Aufnahmesystemen für die ebenfalls angedeuteten Fahrleitungen elektrischer Bahnen,
- Figur 3: zeigt ein Längskettenwerk in der Seitenansicht, wobei die Abschätzung einer Datenreduktion beigefügt ist,
- Figur 4: zeigt die Bildaufnahme von Quertrageinrichtungen mittels 9 Flächenkameras.

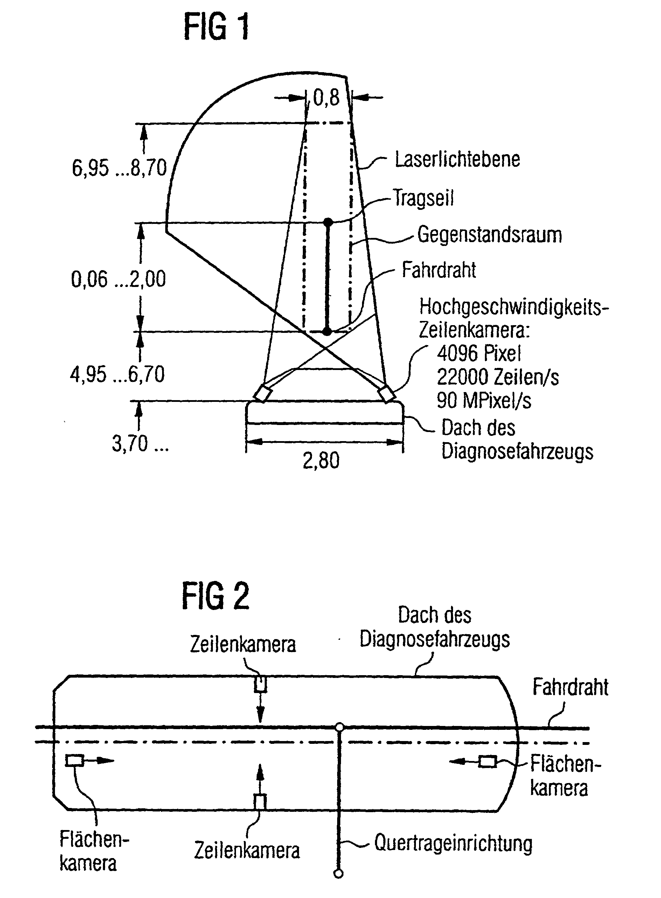

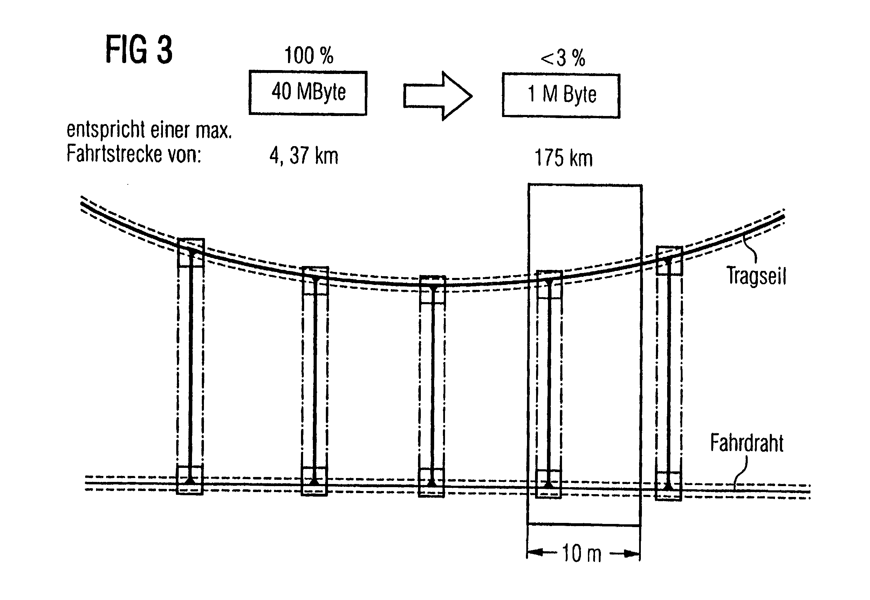

Um die Defekte an Fahrleitungen elektrischer Bahnen mit entsprechendem Längskettenwerk und Quertrageinrichtungen in der Größenordnung von Muttern und Schrauben oder auch einzelne dünne Drähte an schadhaften, aufgespleißten Seilen zu erkennen, ist eine Auflösung von etwa 1 mm erforderlich. Da Längskettenwerke und Quertrageinrichtungen größer als 1 m sind, ergeben sich jedoch besondere Schwierigkeiten. Kameras, die von der Anzahl der Pixel her (4000 x 4000 Pixel) eine genügende Auflösung erbringen würden, besitzen keinen genügend schnellen elektronischen Verschluß, sondern nur einen mechanischen, der zu langsam ist, da wegen der gewünschten Geschwindigkeit eines Diagnosefahrzeuges die Belichtungszeit in engen Grenzen liegen muß. Wird gewünscht, daß das Diagnosefahrzeug 80 km/h schnell ist, so dürfen die Belichtungszeiten nicht größer als 1/22000 s sein, was einer Belichtungszeit von 45 µs entspricht. Durch diese Massnahmen werden Bewegungsunschärfen ausreichend gering gehalten. Zur Aufnahme des Längskettenwerkes werden daher zwei Hochgeschwindigkeits-Diodenzeilenkameras mit zum Beispiel je 4096 Pixeln eingesetzt, wie es in Figur 1 dargestellt wird. Hierdurch wird eine Bildpunktrate von bis zu 100 MPixel/s je Kamera erreicht. Durch die Bewegung des Diagnosefahrzeuges und durch das gleichzeitige Auslesen der Zeilenkamera entsteht ein unendlich langes Bild. Die minimale Belichtungsdauer je Bildspalte dieser Kameras beträgt 40 µs, wodurch die Bewegungsunschärfe vernachlässigbar wird. Zur Beleuchtung wird ein streifenförmig aufgeweiteter Laserstrahl eingesetzt. Störendes Licht anderer Wellenlängen wird durch schmalbandige Filter reduziert, wodurch die Aufnahmen weitgehend unabhängig vom Umgebungslicht werden und dadurch für die spätere Bildauswertung ausreichend konstante Kontrastverhältnisse aufweisen. Somit können außer in der Nacht auch bei bedecktem Himmel automatisch auswertbare Aufnahmen erstellt werden. Auf einer horizontalen Strecke von nur 10 m entstehen wie in Figur 3 dargestellt ist, 40 MByte an Bilddaten. Dies gilt für den Fall, daß das Längskettenwerk über einen senkrechten Bereich von 4 m mit 1 mm Auflösung abgescannt wird. Bei Verwendung von 17 GByte Speicherplatten wäre nach einer Strecke von nur 4,37 km bereits eine Platte mit Bilddaten gefüllt. Bei einer Fahrzeuggeschwindigkeit von beispielsweise 80 km/h entspricht dies einer Datenrate von 90 MByte/s. Es ist beim derzeitigen Stand der Technik nicht möglich, derartige Datenraten schritthaltend, das heißt bei der entsprechenden Geschwindigkeit des Diagnosefahrzeuges ohne Datenstau, zu speichern. Eine Reduktion der Bilddaten auf weniger als 3 % ist mit folgenden Mitteln möglich, die es erlauben, bis zu 175 km ohne Unterbrechung zu fahren:
- Das Längskettenwerk kann seinen Aufenthaltsbereich relativ zu den Kameras verändern, was bedeutet, daß in Figur 1 die Lage des Längskettenwerkes nach links oder nach rechts rutscht, weshalb der Objektraum deutlich größer ist als das Längskettenwerk. Zur Datenreduktion werden die Bilddaten eliminiert, die ober- und unterhalb des Längskettenwerkes liegen. Die Lage des Längskettenwerkes wird hierbei fortlaufend von einem speziellen vorhandenen Radarsystem zur Positionserfassung des Fahrdrahtes bestimmt.
- In einer Schwellwertoperation wird der im allgemeinen dunkle Hintergrund auf einen niedrigen konstanten Wert gesetzt.
- Anschließend wird mit einem konventionellen Kompressionsverfahren für Bilddaten, beispielsweise in JPEG, die Datenmenge komprimiert.
- Abschließend werden nach Zwischenspeicherung auf der Festplatte eines Rechners die komprimierten Daten auf ein Magnetband übertragen.

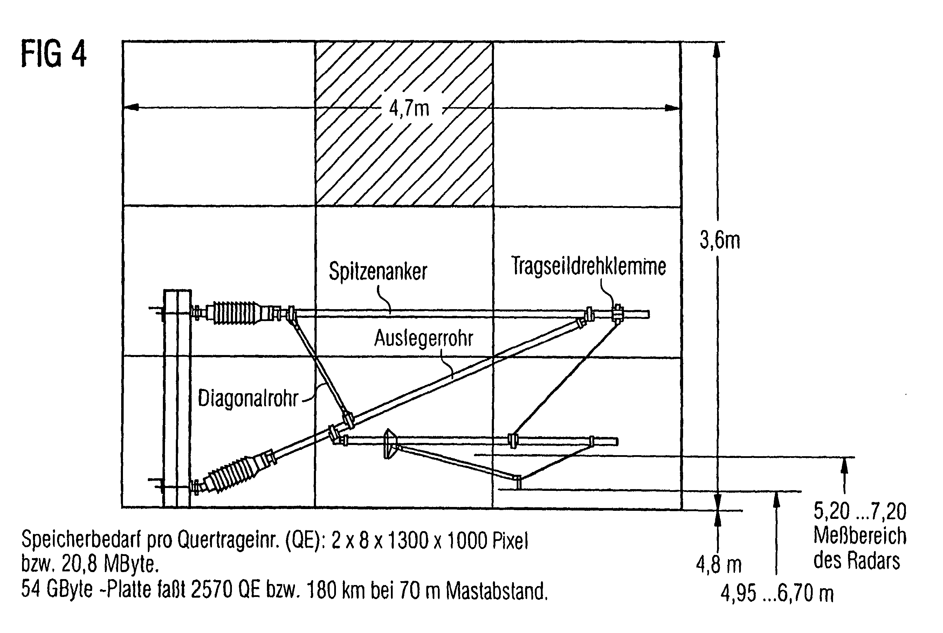

Zur Bildaufnahme beider Seiten der Quertrageinrichtung werden folgende Ausführungen entsprechend Figur 4 beschrieben:

Wie in Figur 4 skizziert werden etwa 9 hochauflösende Flächen - Video - Kameras eingesetzt, deren Belichtungszeit von einem elektronischen Shutter begrenzt wird. Als Beleuchtung dienen entweder Laserdioden oder Scheinwerfer, wobei die Scheinwerfer eine Leistung von jeweils etwa 5 kW aufweisen und entgegen der Fahrtrichtung bzw. in Fahrtrichtung angeordnet und ausgerichtet sind. Da die Datenmenge kleiner ist als beim Längskettenwerk kann auf eine Reduktion verzichtet werden.

Das Triggersignal zur Bildaufnahme an den Quertrageinrichtungen wird von einem normal ausgeführten Lageerkennungssystem unter Einsatz eines Laserradars erzeugt.

Sehr störend wirken sich der Platzbedarf, der Luftwiderstand und der Reinigungsbedarf der großen Scheinwerfer sowie die Blendwirkung auf Unbeteiligte in der Nähe der Bahnstrecke aus. Andererseits bieten Scheinwerfer gegenüber Laserdioden den Vorteil, daß keine Granulation auftritt (kein Speckle-Rauschen).

Alternativ wird vorgeschlagen, anstelle von Flächenkameras zur Aufnahme von Quertrageinrichtungen auch hier wie beim Längskettenwerk Zeilenkameras in Verbindung mit der beschriebenen Laserbeleuchtung einzusetzen. Da sich das Fahrzeug senkrecht zur Quertrageinrichtung bewegt, fehlt hier allerdings die horizontale Bewegung zur Erzeugung eines zweidimensionalen Bildes, da die Laserbeleuchtung lediglich einen beispielsweise senkrecht stehenden Streifen ausleuchtet. Um die Gesamtbeleuchtung und Gesamtbildaufnahme eines Quertragwertes in diesem Fall sicherzustellen, wird in dem gemeinsamen Strahlengang von Laserlichtband und Empfangsoptik ein Schwingspiegel positioniert, der es ermöglicht, innerhalb von ca. 0,2 Sekunden beispielsweise eine horizontale Strecke von 5 m auf der Quertrageinrichtung abzutasten. Ein weiterer Vorteil beim Einsatz einer Laserbeleuchtung auch für Quertrageinrichtungen besteht in der Ähnlichkeit der Bauform mit der des Sensors für das Längskettenwerk, was sich günstig auf die Herstellkosten auswirkt. Zur Unterstützung eines Wegstreckenzählers oder zur allgemeinen Verbesserung der Position eines bestimmten aufgenommenen Bildstreifens beim Längskettenwerk sowie bei der Quertrageinrichtung werden zusätzliche Aufzeichnungen mit einer zweidimensionalen Videokamera angefertigt. Insbesondere in Bezug auf die Bildaufnahme bei den Quertrageinrichtungen ergibt dies besondere Vorteile, da bei einer Geschwindigkeit des Meßfahrzeuges von 80 km/h innerhalb von 0,2 Sekunden sich das Fahrzeug und somit auch das Bildaufnahme und Auswertesystem der Quertrageinrichtung um 4,4 m nähert bzw. entfernt.

In Figur 1 wird insbesondere eine Vorder- oder Rückansicht eines Teiles eines Diagnosefahrzeuges dargestellt. Auf dem Dach des Diagnosefahrzeuges mit einer Breite von 2,8 m sind zwei Hochgeschwindigkeits-Zeilenkameras mit jeweils 4096 Pixeln, 22000 Zeilen/s und 90 MPixeln/s. Ebenfalls im Querschnitt ist das Längskettenwerk dargestellt. Bezeichnet sind das oben positionierte Tragseil und der mittelbar am Tragseil hängende Fahrdraht. Zwischen Tragseil und Fahrdraht sind regelmäßig senkrechte Tragseile vorgesehen. Die dargestellte Laserlichtebene bezieht sich auf die in Figur 1 auf dem Dach des Diagnosefahrzeuges rechts positionierte Bildaufnahmeeinheit bzw. Kamera. Die Beleuchtung bildet für das Längskettenwerk wie bereits beschrieben lediglich eine schichtweise Beleuchtung, wobei jeweils ein Bildstreifen beleuchtet wird. Gleichzeitig wird der entsprechende Bildstreifen aufgenommen. Die ständige Wiederholung ergibt ein quasi unendliches Bild des Längskettenwerks. Der Gegenstands- bzw. Objektraum ist in Figur 1 durch strichpunktierte Linien dargestellt. Aufgrund der Tatsache, daß der Fahrdraht relativ zum Stromabnehmer eines Schienenfahrzeuges auswandert, so daß er nicht ständig an derselben Stelle schleift, muß der Gegenstandsraum entsprechend groß ausgelegt sein. Seine Breite beträgt wie in Figur 1 dargestellt, 0,8 m. Die Höhe des Gegenstandsraumes wird zunächst entsprechend hoch ausgeführt, da diesbezüglich sämtliche konstruktiven Varianten abgedeckt werden müssen. In der nach der Bildaufnahme folgenden Datenreduktion werden oberhalb und unterhalb des Längskettenwerkes liegende Daten entfernt. Die Beleuchtung und Bildaufnahme von zwei Seiten des Längskettenwerkes, wie in Figur 1 dargestellt, ist mit einer erhöhten Erkennungssicherheit verbunden.

Figur 2 zeigt die Aufsicht auf ein Dach eines Diagnosefahrzeuges, wobei der Verlauf des Fahrdrahtes und die Position einer Quertrageinrichtung berücksichtigt sind. Der nicht parallele Verlauf des Fahrdrahtes relativ zur Fahrtrichtung des Diagnosefahrzeuges berücksichtigt das seitliche Auswandern des Fahrdrahtes relativ zu einem Stromabnehmer eines Schienenfahrzeuges. Figur 2 stellt die ungefähre Positionierung von Zeilenkameras dar, die von der Längsseite des Diagnosefahrzeuges und das Längskettenwerk von zwei gegenüberliegenden Seiten aufnehmen. Die für die Bildaufnahme in Bezug auf die Quertrageinrichtung dargestellten Flächenkameras sind derart positioniert, daß sie in oder gegen die Fahrtrichtung detektieren. Für den in Figur 2 dargestellten Fall wird die Quertrageinrichtung mit Scheinwerfern beleuchtet und mit Flächenkameras aufgenommen. Beim Einsatz von Zeilenkameras wird wie beschrieben mit Laserdioden beleuchtet. Es besteht die Möglichkeit, sämtliche zu detektierenden Gegenstände mit Laserdioden zu beleuchten und mit Zeilenkameras aufzunehmen. In diesem Fall müßte zur Beleuchtung und Detektion der Quertrageinrichtung ein Schwingspiegel im optischen Strahlengang vorhanden sein, um die Erstreckung der Quertrageinrichtung quer zur Fahrtrichtung des Diagnosefahrzeuges bezüglich der Beleuchtung und der Bildaufnahme abzudecken. Für die Längserstreckung des Längskettenwerkes ist dies nicht notwendig, da sich das Schienenfahrzeug entlang des Längskettenwerkes bewegt.

Figur 3 zeigt die Seitenansicht eines Ausschnittes aus einem Längskettenwerk. Dargestellt sind das Tragseil und der daran über senkrechte Tragseile hängende Fahrdraht. Der dargestellte Bereich mit einer Breite von 10 m ist beispielsweise der momentan beleuchtete und detektierte Bildbereich. Bei einer 100 %igen Datenspeicherung von beispielsweise 40 MByte wird es sich bei heutiger Speicherkapazität von Speicherplatten von beispielsweise 17 GByte lediglich eine Fahrtstrecke von 4,37 km ergeben. Nach einer Datenreduktion auf weniger als 3 %, das heißt einer Datenmenge von etwa 1 MByte ergibt sich eine zusammenhängende Fahrtstrecke eines Inspektionsfahrzeuges von 175 km.
Figur 4 zeigt die Seitenansicht einer Quertrageinrichtung in oder gegen die Fahrtrichtung eines Schienenfahrzeuges. Für den in Figur 4 dargestellten Fall werden 9 Flächenkameras entsprechend der dort vermerkten 9 Rechtecke eingesetzt. Die Beleuchtung geschieht mittels Scheinwerfern. Der Speicherbedarf beträgt beispielsweise 20,8 MByte pro Quertrageinrichtung. Bei einer Speicherkapazität von 54 GByte auf einer Speicherplatte können 2570 Quertrageinrichtungen an einem Stück aufgenommen werden. Dies entspricht bei einem Maßabstand von 70 m mit jeweils einer Quertrageinrichtung einer Strecke von 180 km.

Es ist nochmals darauf hinzuweisen, daß anstelle der Beleuchtung mit Scheinwerfern die Beleuchtung mit Laserdioden bestimmte Vorteile hat. Somit wird der Platzbedarf auf dem Dach eines Diagnosefahrzeuges relativ gering und der Luftwiderstand bei hohen Geschwindigkeiten hält sich in tragbaren Grenzen. Ferner ist es möglich, das Laserband so zu fokussieren, daß über den Schärfentiefebereich von einigen Metern die Dicke des Lichtbandes einige Millimeter beträgt und somit nur der zu detektierende Bereich beleuchtet wird.
/1/ R. Müller, H. Höfler "Fahrwegüberwachung mit optischer Meßtechnik" in Eisenbahn-Ingenieur Kalender '97, pp. 315-332, Tetzlaff, Darmstadt 1996, ISBN 3-87814-506-3
/2/ "Lasertechnik checkt Oberleitung unter Spannung und bei Tempo 60" in Bahnzeit, April 1998, bzw. Deutsche Patentschrift DE 196 13 737 C, veröffentlicht am 24.09.1998
/3/ "Fahrdrahtmessvorrichtung", Deutsche Patentschrift DE 196 34 060 C1, veröffentlicht am 22.01.98

## Patentansprüche

1. Bildaufnahme- und Auswertesystem zur Inspektion von Fahrleitungen elektrischer Bahnen mit entsprechendem Längskettenwerk und Quertrageinrichtungen, wobei das Längskettenwerk im wesentlichen parallel und die Quertrageinrichtungen im wesentlichen quer zur Fahrtrichtung verlaufen, bestehend aus:
- jeweils mindestens einer Beleuchtungseinheit mit mindestens einer Laserdiode und vorgesetzter Rasterlinsenoptik zur im wesentlichen seitlichen Beleuchtung des Längskettenwerks bzw. der Quertrageinrichtungen,
- mindestens einer Diodenzeilenkamera als Bildaufnahmeeinheit zur jeweiligen Bildpunkterfassung an dem Längskettenwerk bzw. an den Quertrageinrichtungen,
- mindestens einer Rechnereinheit zur Datenreduktion der aufgenommenen Bilddaten,
- mindestens einer Rechnereinheit zur Auswertung hinsichtlich von Defekten an dem Längskettenwerk oder den Quertrageinrichtungen, sowie
- einem Schwingspiegel zur Sicherstellung der Beleuchtung und Erfassung der gesamten Seitenfläche einer aufzunehmenden Quertrageinrichtung.

2. Bildaufnahme- und Auswertesystem zur Inspektion von Fahrleitungen elektrischer Bahnen mit entsprechendem Längskettenwerk und Quertrageinrichtungen, wobei das Längskettenwerk im wesentlichen parallel und die Quertrageinrichtungen im wesentlichen quer zur Fahrtrichtung verlaufen, bestehend aus:
- mindestens einer Beleuchtungseinheit mit mindestens einer Laserdiode und vorgesetzter Rasterlinsenoptik zur im wesentlichen seitlichen Beleuchtung des Längskettenwerkes,
- mindestens einer Beleuchtungseinheit mit mindestens einem Metalldampfscheinwerfer zur im wesentlichen seitlichen Beleuchtung der Quertrageinrichtungen,
- mindestens einer Diodenzeilenkamera als Bildaufnahmeeinheit zur Bildpunkterfassung am Längskettenwerk,
- mindestens einer Flächenkamera mit elektronischem Verschluß als Bildaufnahmeeinheit zur jeweiligen Bildpunkterfassung an den Quertrageinrichtungen,
- mindestens einer Rechnereinheit zur Datenreduktion der aufgenommenen Bilddaten,
- mindestens einer Rechnereinheit zur Auswertung hinsichtlich von Defekten an dem Längskettenwerk oder den Quertrageinrichtungen.

3. Bildaufnahme- und Auswertesystem nach einem der vorhergehenden Ansprüche, wobei eine Rasterlinse aus einer Mindestanzahl von optischen Linsen besteht, so daß die Rasterlinse in Verbindung mit der Laserdiode eine ausgedehnte Lichtquelle darstellt.

4. Bildaufnahme- und Auswertesystem nach einem der vorhergehenden Ansprüche, wobei eine Diodenzeilenkamera mindestens 2000 Pixel und eine Flächenkamera mindestens 1000 x 1000 Pixel aufweisen.

5. Bildaufnahme- und Auswertesystem nach Anspruch 4, wobei die Diodenzeilenkamera ca. 4000 Pixel und die Flächenkamera 4000 x 4000 Pixel aufweisen.

6. Bildaufnahme- und Auswertesystem nach einem der vorhergehenden Ansprüche, wobei ein streifenförmig aufgeweiteter Laserstrahl eingesetzt wird.

7. Bildaufnahme- und Auswertesystem nach einem der vorhergehenden Ansprüche, welches dafür ausgelegt ist, Fahrleitungen oder Quertrageinrichtungen von zwei gegenüberliegenden Seiten zu beleuchten und aufzunehmen.

8. Bildaufnahmesystem nach einem der vorhergehenden Ansprüche, welches dafür ausgelegt ist, Bilddaten nach der Aufnahme einer Komprimierungseinheit und vor der Auswertung einer Dekomprimierungseinheit zuzuführen.

9. Bildaufnahme- und Auswertesystem nach einem der vorhergehenden Ansprüche, wobei die Wellenlänge des eingesetzten Laserlichtes im Infrarotbereich liegt.

10. Bildaufnahme- und Auswertesystem nach Anspruch 9, wobei die Lichtwellenlänge ca. 800 nm beträgt.

11. Bildaufnahme- und Auswertesystem nach einem der vorhergehenden Ansprüche, wobei die Auflösung einer Kamera derart gewählt ist, daß ein Pixel am Objekt maximal 2 mm groß ist.

12. Bildaufnahme- und Auswertesystem nach einem der vorhergehenden Ansprüche, wobei die Belichtungsdauer maximal 90 µs beträgt.

13. Bildaufnahme- und Auswertesystem nach einem der vorhergehenden Ansprüche, wobei eine Laserdiode weniger als 100 Watt elektrische Eingangsleistung bei einem Wirkungsgrad von ca. 0,3 aufweist.

14. Bildaufnahme- und Auswertesystem nach einem der Ansprüche 2-13, wobei ein Metalldampfscheinwerfer mindestens 1 kW elektrische Eingangsleistung aufweist.

15. Bildaufnahme- und Auswertesystem nach einem der vorhergehenden Ansprüche, wobei zusätzlich ein Laserradar zur Ermittlung der Anwesenheit und Lage von Quertrageinrichtungen und zur Lieferung eines Triggersignals zur Bildaufnahme vorhanden ist.

16. Bildaufnahme- und Auswertesystem nach einem der vorhergehenden Ansprüche, wobei eine Videokamera mit schlechterer Auflösung als 2 mm zur synchronen Aufnahme von Quertrageinrichtungen vorhanden ist, um die Bildauswertung zu vereinfachen.

17. Bildaufnahme- und Auswertesystem nach einem der vorhergehenden Ansprüche, wobei wobei ein Wegstreckenzähler vorhanden ist, dessen Daten gleichzeitig mit den Bilddaten gespeichert werden und die Bildauswertung unterstützen.

18. Bildaufnahme- und Auswertesystem nach einem der vorhergehenden Ansprüche, wobei der festgelegte Objektraum größer ist als das aktuell zu detektierende Volumen der Fahrleitungen.

## Claims

1. Image recording and evaluation system for inspecting catenaries of electric railways with a corresponding longitudinal chain system and transverse support devices, whereby the longitudinal chain system runs essentially parallel and the transverse support devices run essentially perpendicular to the direction of travel, comprising:
- at least one illumination unit in each instance with at least one laser diode and upstream grid lens optical system for essentially lateral illumination of the longitudinal chain system or the transverse support devices,
- at least one diode line camera as the image recording unit for respective pixel acquisition at the longitudinal chain system or the transverse support devices,
- at least one computer unit for data reduction of the recorded image data,
- at least one computer unit for evaluation in respect of defects on the longitudinal chain system or the transverse support devices, and
- a pivoting mirror to ensure illumination and acquisition of the entire lateral surface of a transverse support device to be recorded.

2. Image recording and evaluation system for inspecting catenaries of electric railways with a corresponding longitudinal chain system and transverse support devices, whereby the longitudinal chain system runs essentially parallel and the transverse support devices run essentially perpendicular to the direction of travel, comprising:
- at least one illumination unit with at least one laser diode and upstream grid lens optical system for essentially lateral illumination of the longitudinal chain system,
- at least one illumination unit with at least one metal vapor spotlight for the essentially lateral illumination of the transverse support devices,
- at least one diode line camera as the image recording unit for pixel acquisition at the longitudinal chain system,
- at least one area camera with an electronic shutter as the image recording unit for respective pixel acquisition at the transverse support devices,
- at least one computer unit for data reduction of the recorded image data,
- at least one computer unit for evaluation in respect of defects on the longitudinal chain system or the transverse support devices

3. Image recording and evaluation system according to one of the preceding Claims, whereby a grid lens comprises a minimum number of optical lenses so that the grid lens represents an extended light source in conjunction with the laser diode.

4. Image recording and evaluation system according to one of the preceding Claims, whereby a diode line camera has at least 2000 pixels and an area camera has at least 1000 x 1000 pixels.

5. Image recording and evaluation system according to Claim 4, whereby the diode line camera has approx. 4000 pixels and the area camera 4000 x 4000 pixels.

6. Image recording and evaluation system according to one of the preceding Claims, whereby a laser beam expanded in strips is deployed.

7. Image recording and evaluation system according to one of the preceding Claims, which is designed to illuminate and record catenaries or transverse support devices from two opposite sides.

8. Image recording and evaluation system according to one of the preceding Claims, which is designed to supply image data after recording to a compression unit and before evaluation to a decompression unit.

9. Image recording and evaluation system according to one of the preceding Claims, whereby the wavelength of the laser light used is in the infrared range.

10. Image recording and evaluation system according to Claim 9, whereby the light wavelength is approx. 800 nm.

11. Image recording and evaluation system according to one of the preceding Claims, whereby the resolution of a camera is selected so that a pixel on the object is maximum 2 mm high.

12. Image recording and evaluation system according to one of the preceding Claims, whereby the illumination period is maximum 90 µs.

13. Image recording and evaluation system according to one of the preceding Claims, whereby a laser diode has less than 100 Watt electrical input power with an efficiency of approx. 0.3.

14. Image recording and evaluation system according to one of Claims 2 to 13, whereby a metal vapor spotlight has minimum 1 kW electrical input power.

15. Image recording and evaluation system according to one of the preceding Claims, whereby a laser radar system is also present for detecting the presence and location of transverse support devices and for supplying a trigger signal for image recording.

16. Image recording and evaluation system according to one of the preceding Claims, whereby a video camera with lower resolution than 2 mm is present for the synchronous recording of transverse support devices to simplify image evaluation.

17. Image recording and evaluation system according to one of the preceding Claims, whereby a track segment counter is present, the data of which is stored at the same time as the image data and assists image evaluation.

18. Image recording and evaluation system according to one of the preceding Claims, whereby the object space defined is greater than the volume of the catenaries to be detected at the time.

## Revendications

1. Appareil de prise de vues et de restitution d'images pour l'inspection de caténaires de voies électriques munies d'un système de chaînes longitudinales correspondant et de dispositifs porteurs transversaux, le système de chaînes longitudinales s'étendant essentiellement en parallèle au sens de marche et les dispositifs porteurs transversaux essentiellement perpendiculairement au sens de marche, comprenant :
- respectivement au moins une unité d'éclairage munie d'au moins une diode laser et d'une optique à réseau lentille placée en amont pour l'éclairage essentiellement latéral du système de chaînes longitudinales resp. des dispositifs porteurs transversaux,
- au moins une caméra linéaire à diodes, comme unité de prise de vues pour la détection respective des points d'image sur le système de chaînes longitudinales resp. sur les dispositifs porteurs transversaux,
- au moins un ordinateur pour la réduction des données image enregistrées,
- au moins un ordinateur pour l'évaluation de défauts sur le système de chaînes longitudinales ou sur les dispositifs porteurs transversaux, ainsi que
- un miroir oscillant pour assurer l'éclairage et la détection de la totalité de la surface latérale d'un dispositif porteur transversal à prendre en vues.

2. Appareil de prise de vues et de restitution d'images pour l'inspection de caténaires de voies électriques munies d'un système de chaînes longitudinales correspondant et de dispositifs porteurs transversaux, le système de chaînes longitudinales s'étendant essentiellement en parallèle au sens de marche et les dispositifs porteurs transversaux essentiellement perpendiculairement au sens de marche, comprenant :
- respectivement au moins une unité d'éclairage munie d'au moins une diode laser et d'une optique à réseau lentille placée en amont pour l'éclairage essentiellement latéral du système de chaînes longitudinales,
- au moins une unité d'éclairage munie d'au moins un projecteur à vapeur métallique pour l'éclairage essentiellement latéral des dispositifs porteurs transversaux,
- au moins une caméra linéaire à diodes, comme unité de prise de vues pour la détection des points d'image sur le système de chaînes longitudinales,
- au moins une caméra matricielle à obturateur électronique, comme unité de prise de vues pour la détection respective des points d'image sur les dispositifs porteurs transversaux,
- au moins un ordinateur pour la réduction des données image enregistrées,
- au moins un ordinateur pour l'évaluation de défauts sur le système de chaînes longitudinales ou sur les dispositifs porteurs transversaux.

3. Appareil de prise de vues et de restitution d'images selon l'une quelconque des revendications précédentes, une lentille à réseau étant constituée d'un nombre minimum de lentilles optiques, de sorte que la lentille à réseau représente une source de lumière étendue en liaison avec la diode laser.

4. Appareil de prise de vues et de restitution d'images selon l'une quelconque des revendications précédentes, une caméra linéaire à diodes présentant au moins 2000 pixels et une caméra matricielle présentant au moins 1000 x 1000 pixels.

5. Appareil de prise de vues et de restitution d'images selon la revendication 4, la caméra linéaire à diodes présentant env. 4000 pixels et la caméra matricielle présentant 4000 x 4000 pixels.

6. Appareil de prise de vues et de restitution d'images selon l'une quelconque des revendications précédentes, un rayon laser élargi, en forme de bande, étant utilisé.

7. Appareil de prise de vues et de restitution d'images selon l'une quelconque des revendications précédentes, qui est exécuté pour éclairer et prendre des vues de caténaires ou de dispositifs porteurs latéraux de deux côtés opposés.

8. Système de prise de vues selon l'une quelconque des revendications précédentes, lequel est exécuté pour amener des données image à une unité de compression après la prise de vues et à une unité de décompression avant la restitution.

9. Appareil de prise de vues et de restitution d'images selon l'une quelconque des revendications précédentes, la longueur d'onde de la lumière laser utilisée étant située dans le domaine infrarouge.

10. Appareil de prise de vues et de restitution d'images selon la revendication 9, la longueur d'onde de la lumière étant d'env. 800 nm.

11. Appareil de prise de vues et de restitution d'images selon l'une quelconque des revendications précédentes, la résolution d'une caméra étant sélectionnée de telle manière qu'un pixel sur l'objet est d'une grandeur maximale de 2 mm.

12. Appareil de prise de vues et de restitution d'images selon l'une quelconque des revendications précédentes, la durée d'exposition étant de maximum 90 µs.

13. Appareil de prise de vues et de restitution d'images selon l'une quelconque des revendications précédentes, une diode laser présentant moins de 100 watts comme puissance d'entrée électrique pour un rendement d'env. 0,3.

14. Appareil de prise de vues et de restitution d'images selon l'une quelconque des revendications 2 à 13, un projecteur à vapeur métallique présentant une puissance d'entrée électrique d'au moins 1 kW.

15. Appareil de prise de vues et de restitution d'images selon l'une quelconque des revendications précédentes, un radar à laser étant présent en plus pour détecter la présence et la position de dispositifs porteurs transversaux et pour fournir un signal de déclenchement pour la prise de vues.

16. Appareil de prise de vues et de restitution d'images selon l'une quelconque des revendications précédentes, une caméra vidéo de résolution inférieure à 2 mm étant présente pour la prise de vues synchrone de dispositifs porteurs transversaux afin de simplifier la restitution des images.

17. Appareil de prise de vues et de restitution d'images selon l'une quelconque des revendications précédentes, un odomètre étant présent, dont les données sont mémorisées en même temps que les données image et qui soutiennent la restitution des images.

18. Appareil de prise de vues et de restitution d'images selon l'une quelconque des revendications précédentes, l'espace d'objet spécifié étant plus grand que le volume des caténaires à détecter momentanément.
